# EUROPEAN PATENT APPLICATION

(11) **EP 1 959 370 A1**
(43) Date of publication of application: **20.08.2008**
(21) Application number: 06834244.3
(22) Date of filing: 07.12.2006
(51) Int. Cl.: G06F 21/22, G06F 21/20, G06K 17/00, G06K 19/07, G06K 19/10, H04L 9/08

(54) **SECURE DEVICE, INFORMATION PROCESSING TERMINAL, SERVER, AND AUTHENTICATION METHOD**

(30) Priority: 07.12.2005 JP 2005354157; 07.12.2006 JP 2006330820
(71) Applicant: MATSUSHITA ELECTRIC INDUSTRIAL CO., LTD., Osaka 571-8501 (JP)
(72) Inventor: TAKEKAWA, Hiroshi c/o Matsushita El. Ind. Co. Ltd., 2-1-61, Shiromi, Chuo-ku, Osaka 540-6207 (JP); TAKAYAMA, Hisashi c/o Matsushita El. Ind. Co. Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/324489
(87) International publication number: WO 2007/066740

(57) **Abstract**

A secure device can make contents of terminal application authentication information calculation a different complicated calculation process at each time while suppressing the processing load in the secure device and a card application code size to low values. When issuing of a terminal application (302) is requested from an application loader (301) to an application management unit (1011), an instruction content execution unit (1012) embeds authentication information used for calculation of an authentication key required for authentication with an application causing an information processing terminal (30) to perform a process, into the terminal application (302). A calculation complicating unit (1013) creates a calculation problem having a calculation result as an answer and embeds it as a part of the authentication information calculation into the terminal application (302). An authentication information calculation unit (1014) calculates authentication information with the calculation result to create an authentication key. An authentication processing unit (1032) performs authentication of the terminal application (302) by the authentication key. This does not complicate the calculation process while making the authentication information calculation of the terminal application (302) a different complicated calculation at each time.

## Description

### Technical Field

The present invention relates to a secure device that performs authentication through asymmetric operations, information processing terminal, server and authentication method. More particularly, the present invention relates to a secure device such as an IC (Integrated Circuit) card that holds data securely, cellular phone mounted with the secure device, PDA (Personal Digital Assistant), information processing terminal such as a personal computer, a server that holds data securely and an authentication method. Background Art

Secure devices such as IC cards having CPU (Central Processing Unit) and tamper-resistant storage areas can operate card applications, and are used in services such as electronic money, commutation tickets and electronic tickets. Various services can be implemented by mounting this secure device on an information processing terminal such as cellular telephones, using a keyboard and display of the information processing terminal as an user interface for the secure device and transmitting data written into or read from the secure device over a network using a communication function of the information processing terminal. When these services are executed, a terminal application that defines the operations to be carried out by the information processing terminal, operates on the information processing terminal. Furthermore, for services such as delivery of music data, the use of which should be limited, it is a general practice to hold data securely and authorize only a dedicated terminal application to access the server that operates a server application.

The information processing terminal conventionally acquires a desired terminal application by downloading the terminal application from a service provider over a network. Under such a downloading scheme, it is not possible to know whether the terminal application which is started on the information processing terminal and accesses the secure device or a server that holds data securely (hereinafter simply referred to as "server") is legitimate when seen from the secure device or server. For this reason, an authorized user may unintentionally use an illegal terminal application and maybe allowed to use information or services of the secure device or server without being subjected to restrictions whichmustbe imposed on a legitimate terminal application. This means that for information or the like whose saving in the information processing terminal, transmission to a network or printing is prohibited, such operations of saving, transmission and printing are enabled. In such a condition, it is not possible to fully secure confidentiality of confidential information or protect the value of value information or the like.

To solve such problems, there is a scheme which performs authentication between the secure device and terminal application and this scheme is known as a typical authentication scheme between two parties. With this scheme, the information processing terminals of both parties calculate authentication information such as a password and ID, generate keys to be used for the encryption algorithm through this authentication information calculation and assume that the authentication is performed by confirming that both parties have generated the same key (e.g., see Patent Document 1).

In this case, if the component of the terminal application where the authentication information calculation is carried out can be easily analyzed, it is possible to guess the password and generate the key. If the key can be generated by guessing the password, an unauthorized third party can attack by discovering the password by using information exchanged through the authentication processing which has been previously successful without requesting the secure device for authentication any number of times. On the contrary, if the password is known, it is possible to avoid restrictions which should be imposed on the legitimate terminal application by generating keys and performing authentication using a separately created terminal application.

To prevent this situation, the authentication information calculation by the terminal application may be made complicated so as to make analyses difficult. The more complicated the authentication information calculation, the more difficult analyses can be made, but the secure device or server also must perform the same authentication information calculation to generate the same key. Because of this, the processing load and code size of the application executed by the card application or server increase. Therefore, the secure device with limited processing speed of the CPU and limited calculation throughput of the memory cannot make the authentication information calculation so complicated. Furthermore, the server that receives requests for the terminal application from many information processing terminals may also receive a plurality of requests in a concentrated manner in a short time, and therefore the server also has difficulty in making the authentication information calculation complicated. Therefore, a technique of reducing complexity of an authentication information calculation in a secure device or server by applying a method of performing calculation processing using a table for specific authentication information calculations is disclosed (e.g., see Patent Document 2) .
Patent Document 1 : Japanese Patent Application Laid-Open No.2003-263414
Patent Document 2: Japanese Patent Application Laid-Open No.Hei11 288215

### Disclosure of Invention

### Problems to be Solved by the Invention

However, according to the conventional technique including the one disclosed in the aforementioned patent document, the content of authentication information calculation does not change, and, therefore, no matter how complicated the authentication information calculation may be, once the content of authentication information calculation is analyzed, fraud is possible. Moreover, the conventional technique still has not solved the problem that a secure device having limited CPU processing speed and limited calculation throughput of memory or a server that should reduce the apparatus load due to individual authentication processing needs to carry out comparably complicated processing.

It is an obj ect of the present invention to provide a secure device capable of making the content of authentication information calculation of a terminal application complicated calculation processing that varies every time, while suppressing the processing load and code size of card applications in the secure device low, an information processing terminal mounted with this secure device and an authentication method. Moreover, it is another object of the present invention to provide a server capable of making the content of authentication information calculation of a terminal application complicated calculation processing which varies every time, while suppressing the processing load and code size of card applications in the secure device low.

### Means for Solving the Problem

In order to solve the above described conventional problems, the present invention provides a secure device that is mounted in an information processing terminal, stores data and executes a calculation in a concealed manner, and this secure device has: a storage section that stores an application that allows the information processing terminal to perform processing; a instruction document execution section that embeds, in the application, authentication information used to calculate an authentication key required in authentication processing between the application and the secure device; a calculation complication section that creates a calculation problem, with a calculation result selected in advance for an answer, and embeds the calculation problem in the application as part of the authentication information calculation; an authentication information calculation section that calculates the authentication information and the calculation result, and generates the authentication key; and an authentication processing section that performs authentication processing with the application executed by the information processing terminal, using the authentication key.

According to this configuration, a calculation result that is selected in advance is used in the secure device, so that the complexity of calculation processing does not increase substantially. Moreover, the authentication information calculation by the terminal application that has to solve the calculation problem, involves complicated calculation content. Furthermore, since there are usually a plurality of calculation problems that share the same calculation result as an answer, the content of the authentication information calculation by the terminal application may be changed every time. Therefore, it is possible to maintain security against attacks on the terminal application high.

Furthermore, the secure device of the present invention employs a configuration, in which the storage section further stores calculation complication information which the calculation complication section uses to create the calculation problem, the calculation complication information holding at least a set of a calculation problem and a calculation result. According to this configuration, no calculation problem needs to be generated in the secure device, so that neither the processing loadnor the code size increases, and, moreover, the authentication information calculation by the terminal application that must solve the calculation problem involves complicated calculation content.

Furthermore, the secure device of the present invention employs a configuration, in which the data of the calculation problem includes an image of a program code that can be embedded in the application. According to this configuration, data becomes more complicated with the increased amount of code, which makes it difficult to decode that part and which therefore makes data analysis more difficult.

Furthermore, the secure device of the present invention employs a configuration in which the image of the program code is a code for solving the calculation problem. According to this configuration, even if the part that solves the calculation problem is analyzed, it is possible to recover security by updating the image of a program code.

Furthermore, the secure device according to the present invention employs a configuration, in which the calculation complication section selects an adequate calculation problem such that part of a result of a complicated calculation performed by the application is a calculation result stored in the calculation complication information. According to this configuration, it is only necessary to select a problem whose answer is already known, in the secure device, and therefore the complexity of calculation processing does not increase. Moreover, the authentication information calculation by the terminal application that must solve the calculation problem involves complicated calculation content.

Furthermore, the information processing terminal of the present invention employs a configuration having a secure device that stores data and executes a calculation in a concealed manner, and an application loader that requests an issue of an application and receives and starts an application including a complicated calculation from the secure device, and, in this configuration, the secure device has: a storage section that stores an application that allows the information processing terminal to perform processing; a instruction document execution section that embeds, in the application, authentication information used to calculate an authentication key required in authentication processing between the application and the secure device; a calculation complication section that creates a calculation problem, with a calculation result selected in advance for an answer, and embeds the calculation problem in the application as part of the authentication information calculation; an authentication information calculation section that calculates the authentication information and the calculation result, and generates the authentication key; and an authentication processing section that performs authentication processing with the application executed by the information processing terminal, using the authentication key.

According to this configuration, a calculation result that is selected in advance is used in the secure device, so that the complexity of calculation processing does not increase substantially. Moreover, the authentication information calculation by the terminal application that must solve the calculation problem involves complicated calculation content . Furthermore, since there are usually a plurality of calculation problems that share the same calculation result as an answer, the content of the authentication information calculation by the terminal application may be changed every time. Therefore, it is possible to maintain security against attacks on the terminal application high.

Furthermore, the information processing terminal of the present invention employs a configuration, in which the storage section of the secure device further stores calculation complication information which the calculation complication section uses to create the calculation problem, the calculation complication information holding at least a set of a calculation problem and a calculation result. According to this configuration, no calculation problem needs to be generated in the secure device, and therefore neither processing load nor code size increases and moreover the authentication information calculation by the terminal application that must solve the calculation problem involves complicated calculation content.

Furthermore, the information processing terminal of the present invention employs a configuration, in which data of the calculation problem includes an image of a program code that can be embedded in the application. According to this configuration, the calculation becomes more complicated by the increased amount of code, which makes it difficult to decode that part, making analysis more difficult.

Furthermore, the information processing terminal of the present invention employs a configuration, in which the image of the program code is a code for solving the calculation problem. According to this configuration, even if the part that solves the calculation problem is analyzed, it is possible to recover security by updating the image of this program code.

Furthermore, the information processing terminal of the present invention employs a configuration, in which the calculation complication section selects an adequate calculation problem such that part of a result of a complicated calculation performed by the application is a calculation result stored in the calculation complication information. According to this configuration, it is only necessary to select a problem whose answer is already known in the secure device, and therefore the complexity of calculation processing does not increase. Moreover, the authentication information calculation by the terminal application that must solve the calculation problem involves complicated calculation content.

Furthermore, the present invention provides a server transmitting an application that allows an information processing terminal to perform processing, to the information processing terminal, and this server has: a storage section that stores the application; a instruction document execution section that embeds, in the application, authentication information used to calculate an authentication key required in authentication processing between the application and the secure device; a calculation complication section that creates a calculation problem, with a calculation result selected in advance for an answer, and embeds the calculation problem in the application as part of an authentication information calculation; an authentication information calculation section that calculates the authentication information and the calculation result, and generates the authentication key; and an authentication processing section that performs authentication processing with the application executed by the information processing terminal, using the authentication key.

This configuration uses a calculation result selected in advance in the secure device, and therefore the complexity of calculation processing does not substantially increase. Moreover, the authentication information calculation by the terminal application that must solve the calculation problem involves complicated calculation content. Furthermore, since there are normally a plurality of calculation problems that have a certain calculation result as an answer, the content of an authentication information calculation by the terminal application can be made different every time. Therefore, it is possible to maintain security against attacks on the terminal application high.

Furthermore, the server of the present invention employs a configuration further including a complexity selection section that selects the complexity of the calculation problem created by the calculation complication section. According to this configuration, the complexity of authentication information calculation by the terminal application can be selected according to situations, so that it is possible to flexiblyprocesses a case where requests for terminal applications are received from many information processing terminals or communication environment or operation environment of the information processing terminal and thereby smooth the service.

Furthermore, the present invention provides an authentication method having the steps of: selecting authentication information used to calculate an authentication key that is required in authentication processing with an application for allowing the information processing terminal to perform processing, and a calculation result; creating a calculation problem whose answer is the selected calculation result; embedding the selected authentication information in the application, and embedding the created calculation problem in the application as part of an authentication information calculation; transmitting the application, in which the authentication information and the calculation problem are embedded, to the information processing terminal; and performing authentication processing with the application executed by the information processing terminal using the authentication key which is created by calculating the authentication information embedded in the application transmitted to the information processing terminal and the calculation result.

According to this configuration, it is possible to make content of an authentication information calculation by the terminal application complicated calculation processing while suppressing the processing load and code size of the card application in the secure device or server low. Furthermore, since there are a plurality of calculation problems that have a calculation result as an answer, the content of an authentication information calculation by the terminal application can be made different every time. Therefore, it is possible to maintain security against attacks on the terminal application high.

### Advantageous Effect of the Invention

The present invention has a calculation complication section and calculation complication information, and executes complication of calculation processing, so as to increase only the complexity of calculation processing by an information processing terminal without substantially increasing the complexity of calculation processing involved. This allows the content of an authentication information calculation by the terminal application to different complicated calculation processing every time, while suppressing the processing load in the secure device or the server and the code size of a card application or server application low. This makes it difficult to analyze the authentication information calculation, so that safety of authentication processing is secured.

### Brief Description of Drawings

FIG.1 shows the configuration and operation flow of a secure device and information processing terminal according to Embodiment 1 to Embodiment 3 of the present invention;
FIG.2 is a flowchart showing the operation flow of the secure device and information processing terminal according to Embodiment 1 to Embodiment 3 of the present invention;
FIG. 3 is a configuration diagram showing an example of calculation complication information used by a calculation complication section according to Embodiment 1 and Embodiment 4 of the present invention;
FIG.4 illustrates a specific example of instruction document and issue information according to Embodiment 1 and Embodiment 4 of the present invention;
FIG. 5 is a configuration diagram showing an example of calculation complication information used by a calculation complication section according to Embodiment 2 and Embodiment 5 of the present invention;
FIG. 6 is a configuration diagram showing an example of calculation complication information used by a calculation complication section according to Embodiment 3 and Embodiment 6 of the present invention;
FIG.7 is a flowchart showing the configuration and operation flow of a server and information processing terminal according to Embodiment 4 to Embodiment 6 of the present invention; and
FIG.8 is a flowchart showing the operation flow of a server and information processing terminal according to Embodiment 4 to Embodiment 6 of the present invention.

### Best Mode for Carrying Out the Invention

### (An overview of the invention)

The secure device of the present invention has a calculation complication section that creates a calculation problem with a calculation result selected in advance for an answer, and embeds the calculation problem in an application as part of an authentication information calculation, and has calculation complication information which the calculation complication section uses to create a calculation problem. This calculation complication information holds a set of calculation problems and the calculation results. This can make the content of authentication information calculation by the terminal application complicated calculation processing which varies every time, while suppressing the processing load in the secure device and the code size of a card application low and make it difficult to analyze data and thereby secure safety of the authentication processing. That is, it is possible to increase only the complexity of the calculation processing by the information processing terminal, without increasing the complexity of the calculation processing by the secure device substantially.

Hereinafter, several embodiments of the information processing terminal according to the present invention will be explained in detail using drawings. The same components in the drawings used among the embodiments will be assigned the same reference numerals and overlapping explanations will be omitted wherever possible.

### (Embodiment 1)

Embodiment 1 of the present invention will explain a secure device that holds a terminal application. When this secure device is mounted in an information processing terminal and the information processing terminal requests a terminal application to be started, a terminal application is issued, in which method of performing authentication information and authentication information are embedded. When the information processing terminal starts the terminal application, the terminal application calculates an authentication key through calculation processing that is more complicated than by the secure device, and, on the other hand, the secure device calculates an authentication key through simpler calculation processing. An authentication is performed between the secure device and the information processing terminal using authentication keys.

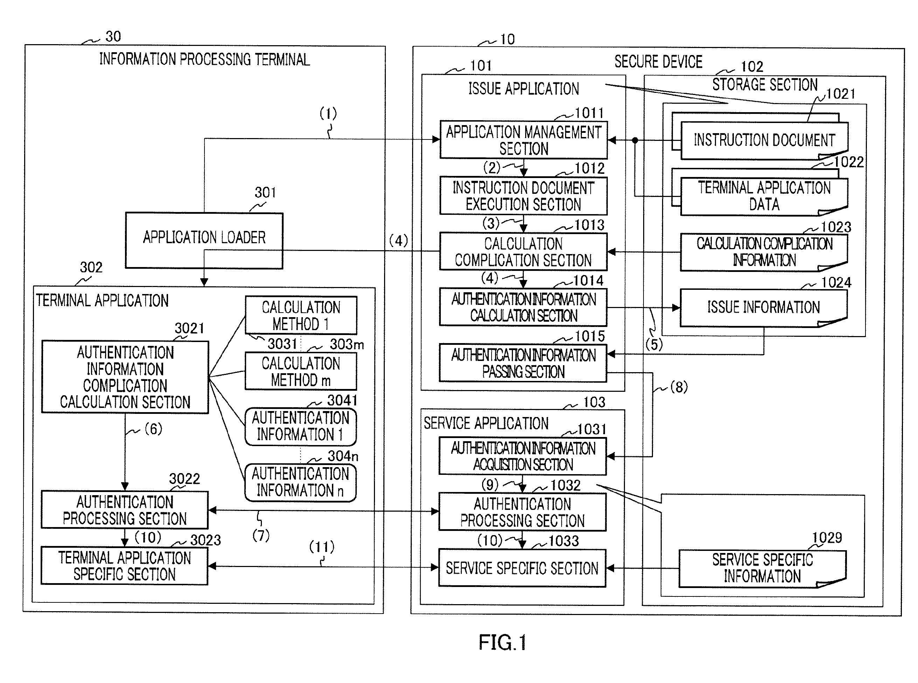

FIG.1 shows the configuration and operation flow of a secure device and information processing terminal according to Embodiment 1 of the present invention. First, the configurations of secure device 10 and information processing terminal 30 will be explained using FIG.1.

In FIG.1, secure device 10 is provided with issue application 101 that embeds calculation methods and authentication information in terminal application 302 and issues terminal application 302, service application 103 that provides information services and a storage section 102 that stores issue application 101 and information used by issue application 101.

Issue application 101 and service application 103 are card applications written in, for example, Java (registered trademark) language and are interpreted and executed by the CPU of secure device 10 and Java (registered trademark) virtual machine. Terminal application 302 is an application written in, for example, Java (registered trademark) language and interpreted and executed by the CPU of information processing terminal 30 and Java (registered trademark) virtual machine.

Issue application 101 is provided with application management section 1011 that manages terminal application 302, instruction document execution section 1012 that interprets instruction document 1021 and performs authentication information embedding processing, calculation complication section 1013 that complicates a calculation, authentication information calculation section 1014 that calculates authentication information and generates an authentication key, and authentication information passing section 1015 that hands over the authentication key in response to a request from service application 103.

Service application 103 is provided with authentication information acquisition section 1031 that requests issue application 101 for an authentication key, authentication processing section 1032 that performs authentication processing using the authentication key and service specific section 1033 that performs processing that is specific to service application 103.

Storage section 102 is a storage device such as EEPROM (Electrically Erasable and Programmable Read Only Memory) or flash memory, on secure device 10, and is configured as a storage area with tamper-resistant characteristics to make direct reference from outside difficult. This storage section 102 stores instruction document 1021 in which instructions for issue processing are written, terminal application data 1022, which is a binary image of terminal application 302, calculation complication information 1023 used in complication by calculation complication section 1013, and issue information 1024 that stores identification information of issued terminal application 302 and authentication key in pairs.

On the other hand, information processing terminal 30 is provided with terminal application 302 and application loader 301 that requests and receives an issue of this terminal application 302. Furthermore, terminal application 302 started is provided with authentication information complication calculation section 3021 that includes m (m is an integer equal to or greater than 1) calculation methods 3031 to 303m and n (n is an integer equal to or greater than 1) pieces of authentication information 3041 to 304n embedded by issue application 101, carries out a calculation that is complicated by calculation complication section 1013 and that is based on a calculation method and authentication information, authentication processing section 3022 that carries out authentication and terminal application specific section 3023 that performs operation specific to the terminal application.

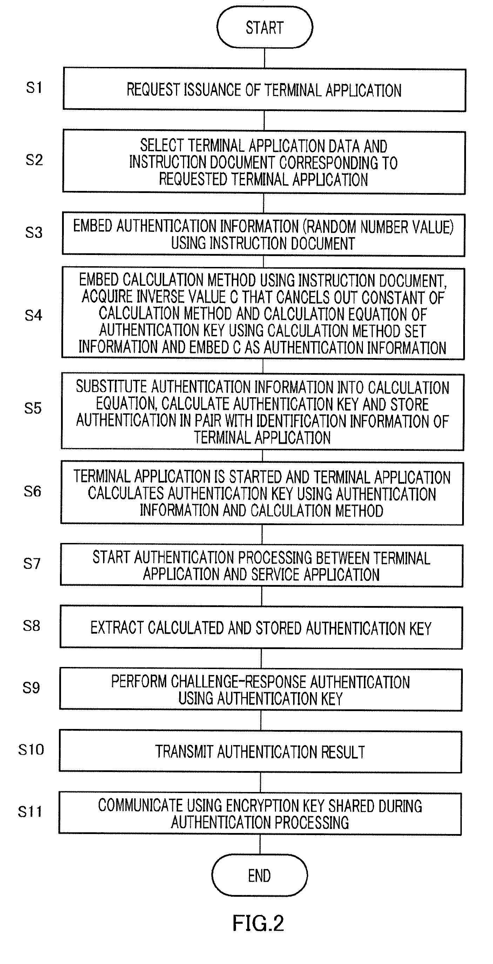

Next, the operations of secure device 10 and information processing terminal 30 shown in FIG.1 will be explained with reference to FIG.2.

FIG.2 is a flowchart showing an operation flow of secure device 10 and information processing terminal 30. Step numbers in FIG.2 correspond to the numbers in parentheses in FIG.1.

Upon receiving a request from a user or the like to start terminal application 302, application loader 301 of information processing terminal 30 sends an issue request for terminal application 302 to application management section 1011 of issue application 101 in secure device 10 (step S1). Application management section 1011 selects terminal application data 1022 corresponding to requested terminal application 302 and corresponding instruction document 1021 and reads the terminal application data and instruction document from storage section 102. Application management section 1011 then hands over read terminal application data 1022 and instruction document 1021 to instruction document execution section 1012 (step S2).

Instruction document execution section 1012 then interprets received instruction document 1021, performs processing of embedding authentication information 3041 to 304n (not necessarily all of n) in terminal application data 1022 and hands over the processing result together with instruction document 1021 to calculation complication section 1013 (step S3). Calculation complication section 1013 embeds calculation methods 3031 to 303m and authentication information 3041 to 304n (not necessarily all of n) using calculation complication information 1023 such that only terminal application 302 becomes a complicated calculation and generates terminal application 302. Calculation complication section 1013 hands over generated terminal application 302 to application loader 301 and passes information necessary to calculate the authentication key to authentication information calculation section 1014. To be more specific, calculation complication section 1013 embeds the calculation method using received instruction document 1021, and, using information as to which set of calculation method images are embedded (hereinafter "calculation method set information"), acquires an inverse value C that cancels out the constant determined for each calculation method, and a calculation equation of the authentication key, and embeds the inverse value C as authentication information. Furthermore, calculation complication section 1013 hands over authentication information 3042 to 304n and the calculation equation as information necessary to calculate the authentication key, to authentication information calculation section 1014 (step S4). The calculation method set information and the inverse value will be described in detail later.

Next, authentication information calculation section 1014 substitutes authentication information 3042 to 304n into the calculation equation, calculates the authentication key, pairs the authentication key with the identification information of terminal application data 1022 and stores the pair in issue information 1024 (step S5). Furthermore, when application loader 301 in information processing terminal 30 receives issued terminal application 302 and starts terminal application 302, authentication information complication calculation section 3021 of terminal application 302 calculates an authentication key using authentication information 3041 to 304n and calculation methods 3031 to 303m, and hands over the calculated authentication key to authentication processing section 3022 (step S6).

In information processing terminal 30, authentication processing section 3022 of terminal application 302 starts authentication processing together with authentication processing section 1032 of service application 103 on the secure device 10 side (step S7). Furthermore, in secure device 10, authentication information acquisition section 1031 of service application 103 acquires the authentication key required by authentication processing section 1032 of secure device 10 from authentication information passing section 1015 of issue application 101. This authentication key is the one that authentication information calculation section 1014 calculated in step S5 and that was stored in issue information 1024 (step S8). Authentication processing section 1032 in secure device 10 then receives the authentication key from authentication information acquisition section 1031, checks with authentication processing section 3022 of terminal application 302 that the authentication keys are the same, and performs authentication processing. Here, challenge-response authentication is used to check that the authentication keys are the same (step S9).

Furthermore, authentication processing section 3022 of information processing terminal 30 and authentication processing section 1032 of secure device 10 report the authentication result to terminal application specific section 3023 and service specific section 1033, respectively (step S10). Terminal application specific section 3023 of information processing terminal 30 and service specific section 1033 of secure device 10 communicate with each other using a new shared key acquired during authentication processing (step S11). When the authentication processing fails, terminal application specific section 3023 and service specific section 1033 will not communicate with each other longer, and information processing terminal 30 erases terminal application 302.

Hereinafter, the mechanism of how the calculation by authentication information complication calculation section 3021 becomes complicated so that the calculation in authentication information calculation section 1014 is kept simple, will be explained.

First, an overview of the above mechanism will be explained. For ease of explanation, suppose the number n of pieces of authentication information 3041 to 304n is 5 and authentication information 3042 to 3045 are a, b, c and d, respectively, and authentication information 3041 is C. All the pieces of authentication information 3042 to 3045 are all numbers of 64 bits. This is because the authentication information is assumed to be processed as the long type of Java (registered trademark).

For the calculation method, a method of returning a result of multiplying a given argument by one (or several) of a, b, c and d and further multiplying the result by the constant determined for each calculation method, is used. The constants also have 64 bits. Authentication information complication calculation section 3021 starts with passing C (that is, authentication information 3041) to calculation method 3031, hands over the calculation result to calculation methods 3032 to 303m one after another for calculation and, obtains a product made up of the values of C, a, b, c, d and constants. Finally, authentication information complication calculation section 3021 uses the remainder resulting from dividing the product by the 32nd power of 2 as the authentication key. In actual use, a key requires 128 bits or 256 bits, for example, and therefore a plurality of values of 32 bits may be embedded using this method or other methods such as using information to be directly embedded may be used together.

C is selected such that 1 always remains when the product of the products of all multiplied constants and C, is divided by the 64th power of 2 (therefore C is called an "inverse value"). Since a calculation problem is designed to be created such that the answer becomes "1" for answer "1" selected for convenience, the product made up of a, b, c and d is calculated consequently. Since the authentication key is the remainder resulting from dividing the calculation result by the 32nd power of 2, secure device 10 needs not carry out any 64-bit calculation and the int-type calculation using lower 32 bits of a, b, c and d may also be adopted.

Next, calculation complication information 1023 will be explained.

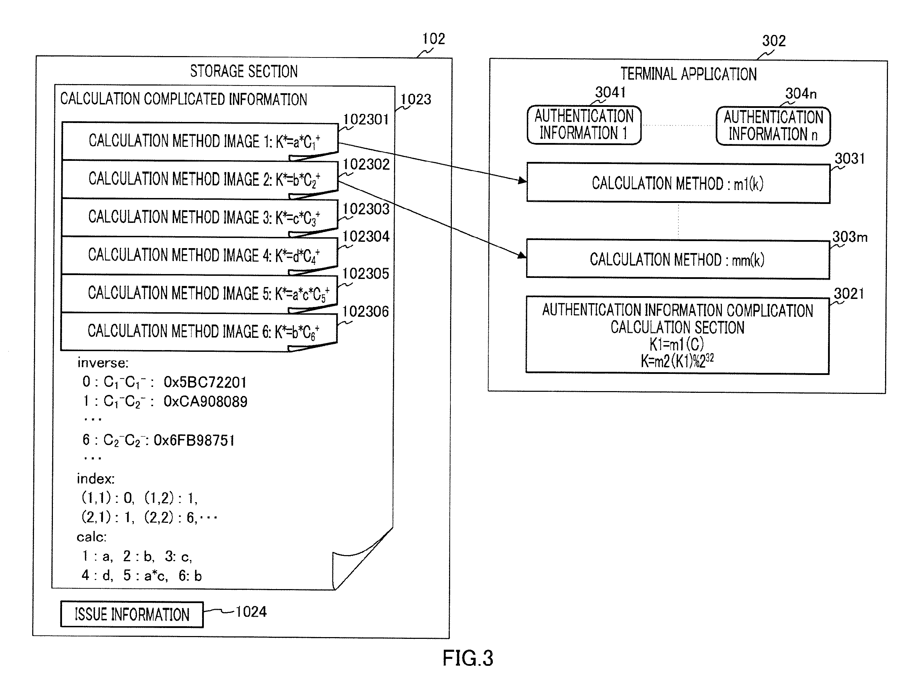

FIG.3 is a configuration diagram showing an exampleofcalculationcomplicationinformation1023used in calculation complication section 1013 of Embodiment 1 of the present invention. Calculation complication information 1023 will be explained using FIG. 3. As shown in FIG.3, calculation complication information 1023 includes a calculation method image which is to be embedded, a list of inverse values "inverse, " "index" which selects an inverse value from the embedded method and a list of calculation equations "calc" used by authentication information calculation section 1014.

First, all values that can be inverse value candidates are ordered and numbered. This is the information expressed as "inverse" in FIG.3. "0: C₁⁻C₁⁻ : 0x5BC72201" indicates that the value of 0-th inverse value C₁⁻C₁⁻ is 0x58C72201. The pair of numbers, Cₙ⁺ and Cₙ⁻, is selected such that the product of the two numbers divided by the 64th power of 2 leaves 1.

Furthermore, by providing a table for obtaining numbers from the calculation method set information, an inverse value is easily obtained from the calculation method set information. This table is the information expressed as "index" in FIG.3. For example, " (1, 2) :1" indicates that, when calculation method image 1 and calculation method image 2 are selected as a set of calculation method images, the inverse value of index number 1 is used. Since the constants multiplied in the respective methods are C₁⁺C₂⁺, C₁⁻C₂⁻ is designed to be selected.

Furthermore, a calculation equation indicating what kind of calculation is carried out, is stored per calculation method image. That is the information expressed as "calc" in FIG.3. "5: a*c" indicates that a*c is executed with calculation method image 5. Constants are useless in issue application 101 and so omitted.

When, for example, 1 and 2 are selected as the calculation method, the calculation method set information is (1, 2). It is apparent from these information that C₁⁻C₂⁻ whose index number is 1 can be selected as C and that the expression calculated by authentication information calculation section 1014 is a*b which is the product of expressions 1 and 2 of "calc."

Next, instruction document 1021 and issue information 1024 will be explained.

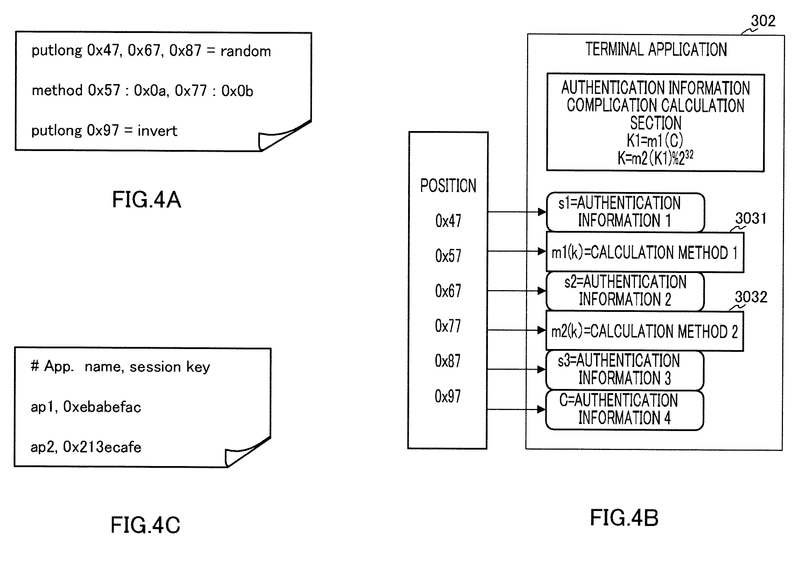

FIG.4 illustrates a specific example of the instruction document and issue information in Embodiment 1 of the present invention and FIG.4A shows an example of the instruction document, FIG.4B illustrates the meaning of numerical values of the instruction document and FIG.4C shows an example of the issue information. The instruction document refers to information used by instruction document execution section 1012 and calculation complication section 1013 to carry out embedding and complication processing, and describes the position and type of a variable of terminal application data 1022 and position of the method or the like. When the location of the calculation method is secured by entering a dummy method, the maximum method size value that can be embedded, is further required.

FIG.4A shows an example of the instruction document and terminal application data 1022 needs to be analyzed to obtain position information as described in this instruction document. This analysis may be carried out using a card application, but, since the analysis is difficult, it is usually performed outside and the result is stored.

FIG.4B shows the relationship between position information of the instruction document and terminal application data 1022. This example shows that the locations of long-type variables s1, s2 and s3 are 0x47, 0x67 and 0x87, respectively, the locations of calculation methods m1 and m2 are 0x57 and 0x77, the maximum values of the sizes of the methods embedded at those locations are 0x0a and 0x0b, and the location of inverse value C is 0x97. Variable names are not required for the card applications and so are not described in the instruction document.

The locations of the variables are used when authentication information is embedded, and the locations of the calculation methods are used when calculation method images are used. That is, when authentication information is embedded in variable s1, random values are embedded in 8 bytes from address 0x47, and, when a calculation method image is embedded in method ml, the calculation method image is embedded within 0x0a bytes at and after address 0x57. In addition, the range of the values of the variables may also be described if necessary.

FIG.4C shows an example of information stored in issue information 1024. That is, as shown in FIG.4C, information that can uniquely identify terminal application 302 such as the name and ID of terminal application 302 is stored paired with the authentication key.

Next, the operation flow of the instruction document and issue information in FIG.4 will be explained with reference to FIG.1 and FIG.2 and in correspondence with step numbers in FIG.1 and FIG.2.

Application loader 301 sends an issue request of terminal application 302 to application management section 1011 of issue application 101 in secure device 10 (step S1). Application management section 1011 then selects terminal application data 1022 and instruction document 1021 and hands over the application data and instruction document to instruction document execution section 1012 (step S2).

Next, upon receiving terminal application data 1022 and instruction document 1021, instruction document execution section 1012 embeds random numbers in terminal application data 1022 as authentication information 3042 to 304n using the position information of the variable written in instruction document 1021 and hands over the authentication information to calculation complication section 1013. In this case, authentication information 3041 is kept unoccupied for later use (step S3).

Calculation complication section 1013 that has received terminal application data 1022 and instruction document 1021 from instruction document execution section 1012 randomly selects calculation method images 102301 to 102306 and embeds the calculation method images in locations where the calculation methods provided in advance for terminal application data 1022 using the position information on the method written in instruction document 1021. In FIG.3, calculation method image 1 (102301) and calculation method image 2 (102302) are embedded, but a plurality of identical calculation method images may also be selected. These are calculation methods 3031 to 303m. Therefore, these calculation method images vary every issue, and there are calculation method images corresponding in number to the m-th power of 6 (the number of calculation method images) in this case. When the number of calculation method images is 1, there are calculation method images corresponding in number to the m-th power of 1.

Next, calculation complication section 1013 acquires a necessary number from "index" of calculation complication information 1023 using the calculation method set information, acquires an inverse value C from "inverse" and embeds the inverse value C as authentication information 3041 of terminal application data 1022. The corresponding calculation equation is obtained from calculation complication information 1023 using the calculation method set information and calculation equation, and the calculation equation and authentication information 3042 to 304n are handed over to authentication information calculation section 1014. This is the information expressed as "calc" in the equation shown in FIG.3 (step S4).

In this way, when calculation complication section 1013 acquires the calculation equation, authentication information calculation section 1014 substitutes authentication information 3042 to 304n into the calculation equation and calculates an authentication key. Authentication information calculation section 1014 then associates the authentication key with the identification information of terminal application 302 and stores the authentication key in storage section 102 as issue information 1024 (step S5).

Next, the method of selecting constants and inverse value C included in the calculation method will be explained.

First, a pair of Cₙ⁺ and Cₙ⁻, with the index number n, is selected. The pair is selected using an extended Euclidian algorithm such that one is a random odd number and the remainder resulting from multiplying the one by the other and dividing the product by the 64th power of 2, is 1. Several such pairs are selected (6 sets are selected in FIG.3).

Next, calculation method 303m determines to multiply the m-th constant Cₘ⁺. It is thereby possible to know by what constant the calculation method set information is multiplied. When calculation method image 102301 is embedded as calculation method 3031 and calculation method image 102302 is embedded as calculation method 3032, C₁ ⁺ and C₂⁺ are multiplied. In this case, the inverse value may be given by multiplying C₁⁻ and C₂⁻. That is, one multiplied by all the others of the pair corresponding to the multiplied constant is selected as the inverse value. The method of ordering all possible combinations in advance and obtaining the index from the operation method information and obtaining the inverse value has been described above.

Since the generation in calculation complication information 1023 generally also requires a large volume of program code and the calculation takes long time, calculation complication information 1023 is generated in advance and stored. A calculation complication information generation apparatus (not shown) for this exists separately, and the secure device stores the information generated by this calculation complication information generation apparatus.

As described above, according to Embodiment 1 of the present invention, secure device 10 embeds authentication information used to calculate an authentication key in terminal application 302, creates a calculation problem with a calculation result selected in advance for an answer, and embeds the calculation problem in terminal application 302 as part of an authentication information calculation on the information processing terminal 30 side. This makes it possible to make the content of the authentication information calculation by terminal application 302 involve complicated calculation processing, while suppressing the processing load in secure device 10 and the code size of the card application at a low level. Furthermore, since authentication information and calculation problems are randomly selected, the content of the authentication information calculation on the information processing terminal 30 side can be made changed every time. Therefore, the security against attacks on the terminal application can be maintained high. Furthermore, the information processing terminal 30 side performs complicated authentication information calculation and therefore can generate an authentication key. On the other hand, the secure device 10 side can generate the same authentication key with a smaller amount of calculation and perform mutual authentication depending on whether or not the authentication keys generated match between information processing terminal 30 and secure device 10.

In Embodiment 1, inverse value C is embedded and constants eventually disappear, but the present invention is not limited to this. For example, it is also possible to embed constant 1 instead of C, store C in issue application 101, receive the calculation result of terminal application 302 as is, multiply C to erase the constant, compare the calculation result with the self-calculated authentication key and thereby assume this as authentication of terminal application 302. By so doing, it is possible to conceal information indicating that only C is selected depending on other authentication information. However, this case does not constitute mutual authentication.

According to Embodiment 1, when secure device 10 is mounted on information processing terminal 30, information processing terminal 30 requests starting of terminal application 302, but this is not limited to the time of mounting and information processing terminal 30 may request starting of terminal application 302 at any time as long as secure device 10 is mounted.

Furthermore, in Embodiment 1, instruction document execution section 1012 embeds most of authentication information 3041 to 304n and calculation complication section 1013 embeds only the inverse value C, but calculation complication section 1013 may embed all the information. Furthermore, in Embodiment 1, an authentication key is generated from authentication information 3041 to 304n, the authentication key is regarded as a common key and the possession of the identical key is subjected to authentication processing using a challenge-response authentication, but the present invention is not limited to this and it is also possible to perform different authentication processing as in the case of the above described method of not embedding the inverse value C.

Furthermore, in Embodiment 1, authentication information is assumed to have 64 bits, but a value greater than this may also be used if a remainder resulting from a division by 32 bits is used finally and the authentication information may have, for example, 128 bits. In such a case, further complication may be expected by mounting a multiple length calculation using the terminal application. Furthermore, Embodiment 1 causes authentication information 3041 to 304n to be calculated using a calculation equation, but the present invention is not limited to this and calculation complication section 1013 may multiply authentication information 3041 to 304n while performing complication processing and thereby acquire an authentication key. In such a case, interpretation of the calculation equation is unnecessary, thereby providing a simpler mechanism.

Furthermore, in Embodiment 1, authentication information complication calculation section 3021 is statically provided in terminal application 302, but the present invention is not limited to this and a plurality of these methods may be provided as data and stored in a card and issue application 101 may embed the methods at the time of issuance of terminal application 302. In this case, the value of the address indicating the location of authentication information complication calculation section 3021 is written in instruction document 1021. By so doing, the degree of random complexity further increases, and not only safety increases but also security can be recovered by updating the data of authentication information complication calculation section 3021 even if an analysis is performed completely.

Furthermore, in Embodiment 1, the calculation method image and data of authentication information complication calculation section 3021 may also be obfuscated. By so doing, further complication is possible. Furthermore, in Embodiment 1, the calculation method image or data of authentication information complication calculation section 3021 may also be made to vary from one card to another. By so doing, it is possible to prevent information illegally acquired by a third party as a result of discarding the card from being directly used for other cards and consequently increase the security.

Furthermore, in Embodiment 1, all pieces of authentication information 3041 to 304n are embedded, but the embodiment may also be configured so that only part of authentication information is embedded and the remaining authentication information is handed over after startup. By so doing, information is not complete before executing authentication processing, and it is thereby possible to make analysis more difficult. Furthermore, in Embodiment 1, information on a problem that can be easily created from an answer is stored as calculation complication information 1023, but the present invention is not limited to this. The problem may be self-made if the calculation performance of the card allows the creation of such a problem, or an answer may be randomly generated and a problem using the answer as a solution may be generated. By so doing, it is possible to increase the degree of complexity.

Furthermore, in Embodiment 1, constants and inverse value are predetermined, but, if the card application has enough capacity, these constants may be randomly generated and an inverse value may be calculated. In this case, randomness will increase and safety can further be improved.

### (Embodiment 2)

The configurations of information processing terminal 30 and secure device 10 according to Embodiment 2 are similar to those of Embodiment 1 in FIG.1. However, this embodiment differs in the content of calculation complication information 1023 and the operation of calculation complication section 1013 that processes that content.

First, an overview of the principle that a calculation of authentication information complication calculation section 3021 becomes more complicated, requiring authentication information calculation section 1014 to perform only a simplified calculation will be explained. For simplicity of explanation, suppose the number n of pieces of authentication information 3041 to 304n is 4 and authentication information 3041 to 3044 are a, b, c and d respectively. However, unlike Embodiment 1, authentication information 3041 is not set to inverse value C. All the pieces of authentication information 3041 to 3044 in this case are numbers of 64 bits. In a specific example of Embodiment 2, as the calculation method, a method is used whereby a result obtained by multiplying a given argument by any one (or may also be a plurality) of a, b, c and d and further multiplying the product by a constant determined for each calculation method is returned.

Authentication information complication calculation section 3021 starts handing over "1" to calculation method 3031, passes the calculation result to calculation methods 3032 to 303m one after another for calculations and finally obtains the product made up of the values of a, b, c and d and constants. Finally, authentication information complication calculation section 3021 uses the remainder resulting from a division by the 32nd power of 2 as an authentication key. A set of constant and calculation method to be entered is selected such that the remainder resulting from dividing the product of all multiplied constants by the 64th power of 2 is always 1. On the other hand, authentication information calculation section 1014 need not perform calculations using constant values.

Next, calculation complication information 1023 will be explained.

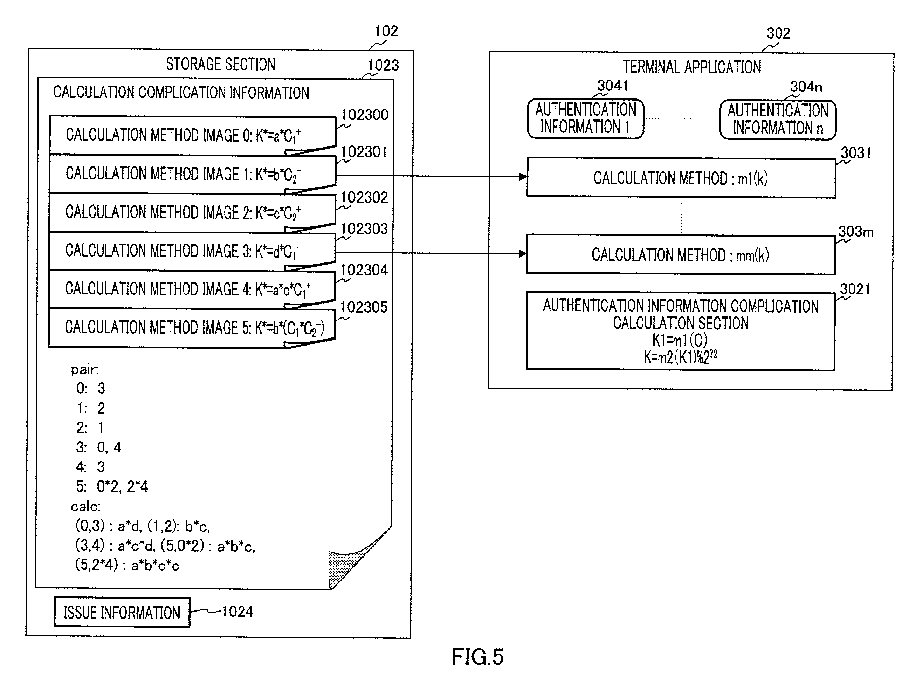

FIG.5 is a configuration diagram showing an example of calculation complication information 1023 used by a calculation complication section according to Embodiment 2 of the present invention. Calculation complication information 1023 will be explained using FIG.5. Calculation complication information 1023 includes "pair" which describes pairs of a calculation method image to be embedded and a method to be embedded instead of "inverse" and "index" in FIG.3 and includes a list of calculation equations "calc" used by authentication information calculation section 1014. However, the content of "calc" is different from that in FIG.3.

In this case, an embedding calculation method is selected such that there are pairs whose constants can be canceled out. Therefore, as shown in "pair" information in FIG.5, pairs which cancel out each other are enumerated so that when one is randomly selected, the other is selected so as to cancel the one. In FIG.5, ""pair" 0: 3" indicates that when calculation method image 0 is selected, if calculation method image 3 is selected, the two cancel out each other. On the other hand, "5: 0*2, 2*4" indicates that when 5 is selected, a pair of (0, 2) or (2, 4) should be selected.

The calculation equation used for an authentication information calculation by authentication information calculation section 1014 is determined by the pair of methods to be embedded. That is, " (0, 3) : a*d" of "calc" shown in FIG. 5 indicates that when a pair of (0, 3) is selected, a*d is used as the expression to calculate authentication information.

Furthermore, as calculation method image 102305 in FIG.5, a plurality of constants can be canceled out at one time. In this case, when calculation method image 102305 is assumed to be embedded, both calculation method image 102300 and calculation method image 102302 or calculation method image 102302 and calculation method image 102304 are embedded as pairs.

Constants Cₙ⁺ and Cₙ⁻ included in calculation methods 3031 to 303m are selected such that the remainder resulting from multiplying the constants together as in the case of Embodiment 1 and dividing the product by the 64th power of 2, is 1. Several such pairs are selected (2 sets are selected in FIG.5) and calculation method images are provided such that there are pairs which cancel out each other.

Next, operations of secure device 10 and information processing terminal 30 according to Embodiment 2 will be explained with reference to FIG.1 and FIG.2 and in correspondence with step numbers in FIG. 1 and FIG.2.

First, application loader 301 transmits an issue request of terminal application 302 to application management section 1011 of issue application 101 in secure device 10 (step S1). Applicationmanagement section 1011 then selects terminal application data 1022 and instruction document 1021 and hand over the application data and instruction document to instruction document execution section 1012 (step S2).

Instruction document execution section 1012 which has received terminal application data 1022 and instruction document 1021 embeds random numbers as authentication information 3041 to 304n in terminal application data 1022 using position information of a variable written in instruction document 1021 and hands over the authentication information to calculation complication section 1013. In this case, this embodiment differs from Embodiment 1 in that random numbers are also embedded in authentication information 3041 (step S3).

Calculation complication section 1013 which has received terminal application data 1022 and instruction document 1021 from instruction document execution section 1012 selects and embeds calculation method images 102300 to 102306 (6 images in FIG.5) in locations provided in advance in terminal application data 1022 where calculation methods are embedded using position information on the method written in instruction document 1021.

In this case, when calculation complication section 1013 selects a calculation method image multiplied by a certain constant (e.g., C₁⁺), calculation complication section 1013 selects such a calculation method image that the calculation method image is multiplied by a constant (C₁⁻) that cancels out the constant. In FIG.5, calculation method image 0 (102300) and calculation method image 3 (102303) are embedded. The information used for this is "pair" information in FIG.5. The calculation method images selected and embedded in this way are calculation methods 3031 to 303m. Therefore, these calculation methods vary from one issuance to another.

Next, calculation complication section 1013 acquires the corresponding calculation equation from calculation complication information 1023 using calculation method set information and hands over the calculation equation and authentication information 3041 to 304n to authentication information calculation section 1014. However, unlike Embodiment 1, no inverse value C is acquired (step S4). Authentication information calculation section 1014 then acquires the calculation equation and authentication information 3041 to 304n, substitutes authentication information 3041 to 304n into the calculation equation and calculates an authentication key. This calculation equation gives information expressed as "calc" in FIG.5. Finally, the authentication key is associated with the identification information of terminal application 302 and stored as issue information 1024 in storage section 102 (step S5).

In this way, according to Embodiment 2 of the present invention, there is no more information of inverse value C whose data size is relatively large in calculation complication information 1023 in Embodiment 1, and it is thereby possible to suppress the capacity of storage section 102 in secure device 10 to a small level.

### (Embodiment 3)

The configurations of information processing terminal 30 and secure device 10 according to Embodiment 3 are similar to those of information processing terminal 30 and secure device 10 according to Embodiment 1 shown in FIG.1. However, the content of calculation complication information 1023 and the operation of calculation complication section 1013 that processes the calculation complication information are different from those in Embodiment 1.

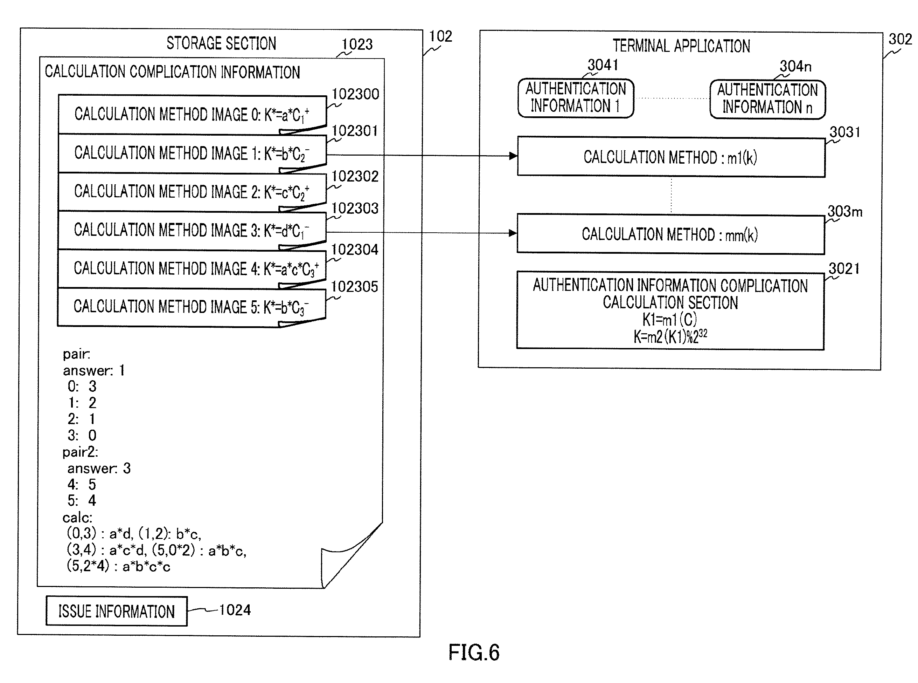

FIG.6 is a configuration diagram showing an exampleofcalculationcomplicationinformation1023used by the calculation complication section in Embodiment 3 of the present invention. Calculation complication information 1023 will be explained using FIG.6. A difference from Embodiment 2 is that this embodiment can describe not only pairs whose product becomes 1 but also pairs whose product becomes an arbitrary number. The multiplication result gives information called "answer" of "pair2" in FIG.6 and indicates that when the set of embedded methods is (0, 3), the product of constants is 1 and when the set of embedded methods is (4, 5), the product of constants is 3.

In this way, according to Embodiment 3 of the present invention, though most of the operations of calculation complication section 1013 is the same as that in Embodiment 2, calculation complication section 1013 according to Embodiment 3 is different in that when a pair is selected, a calculation result is selected and a pair is randomly selected from among pairs that correspond to that value and the selected calculation result is also handed over to authentication information calculation section 1014. By so doing, regularity of constants is made further difficult to understand.

### (Embodiment 4)

Embodiment 4 of the present invention will explain a server that holds terminal applications and provides services to information processing terminals over a network. When an information processing terminal transmits a request for downloading a terminal application to the server, the server issues a terminal application in which a method for carrying out complicated authentication information calculation and authentication information are embedded. When the information processing terminal starts the terminal application, the terminal application calculates an authentication key through calculation processing more complicated than that of the server and the server calculates an authentication key through simpler calculation processing, and authentication using the authentication keys is performed between the server and information processing terminal.

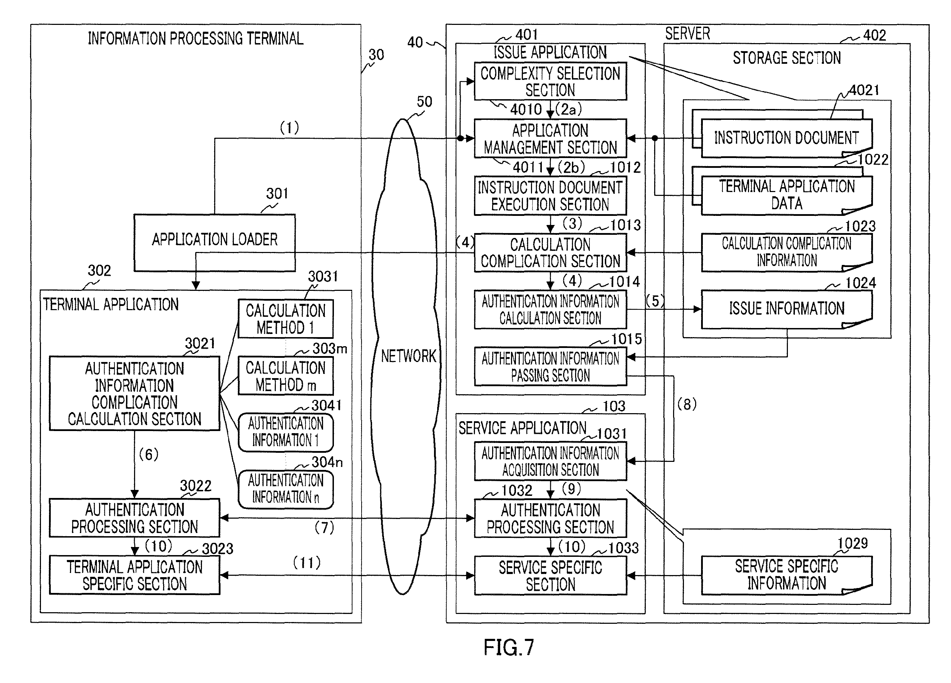

FIG.7 shows the configuration and operation flow of the server and information processing terminal according to Embodiment 4 of the present invention and corresponds to FIG. 1 of Embodiment 1. Therefore, the same parts as those in FIG. 1 will be assigned the same reference numerals and explanations thereof will be omitted. A plurality of information processing terminals 30 are connected to server 40 via network 50. However, only one information process ing terminal 30 is shown here. Server 40 is provided with storage section 402 that stores instruction document 4021 having content different from those of instruction document 1021 in FIG.1 and issue application 401 that has application management section 4011 that operates differently from application management section 1011 in FIG.1. Issue application 401 further has complexity selection section 4010.

Storage section 402 stores instruction document 4021 provided for each level of complexity of authentication information calculation (hereinafter referred to as "complexity") in advance. Each instruction document 4021 has contents for instructing issue of terminal application 302 that allows information processing terminal 30 to execute an authentication information calculation of corresponding complexity.

Complexity selection section 4010 selects the complexity of an authentication information calculation to be executed by terminal application 302 and hands over the selection result to application management section 4011.

Application management section 4011 manages terminal application 302 based on the selection result of complexity by complexity selection section 4010.

Issue application 401 is an application written, for example, in Java (registered trademark) language and interpreted/executed by the CPU of server 40 and Java (registered trademark) virtual machine.

Storage section 402 is a storage device such as a hard disk on server 40 and is further configured as a storage area hard to be directly referenced from outside by carrying out access control or the like.

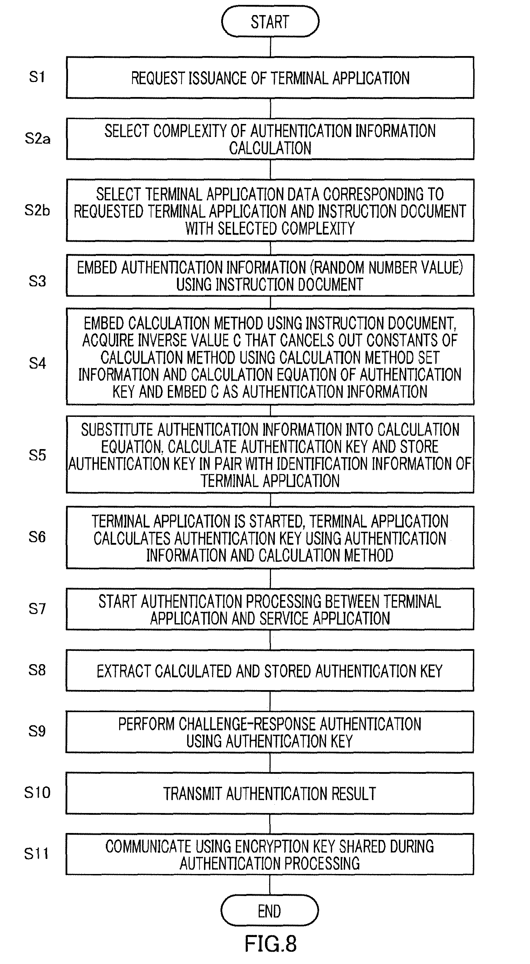

Next, the operations of server 40 and information processing terminal 30 shown in FIG.7 will be explained with reference to FIG.8.

FIG.8 is a flowchart showing an operation flow of server 40 and information processing terminal 30 and corresponds to FIG.2 of Embodiment 1. The same parts as those in FIG.2 will be assigned the same reference numerals and explanations thereof will be omitted and secure device 10 in Embodiment 1 is replaced by server 40 in explanations. Step numbers in FIG.8 correspond to the alphanumeric characters in parentheses in FIG.7.

When the user or the like requests for a download of terminal application 302, application loader 301 of information processing terminal 30 transmits an issue request of terminal application 302 to application management section 4011 of issue application 401 at server 40. In this case, the issue request of terminal application 302 is also inputted in complexity selection section 4010 (step S1).

First, complexity selection section 4010 selects the degree of complexity of the authentication information calculation to be carried out by information processing terminal 30, which is the sender of an issue request for terminal application 302, and hands over the selection result to application management section 4011 (step S2a).

To prevent spoofing by analyzing communication data, a timeout is usually set in the time after issuing terminal application 302 until mutual authentication is completed. However, when traffic is heavy, the speed of communication between server 40 and information processing terminal 30 decreases, and it takes time until mutual authentication is completed and authentication processing may fail despite the fact that mutual authentication with legitimate terminal application 302 is performed. Therefore, for example, complexity selection section 4010 decides the level of network load and speed of communication with information processing apparatus 30, selects relatively low complexity for a request of terminal application 302 when the network load is high or the communication speed is low. This prevents the time until mutual authentication is completed from being extended and prevents authentication processing from failing.

Upon receiving the complexity selected from complexity selection section 4010, application management section 4011 reads requested terminal application data 1022 and instruction document 4021 corresponding to the selected complexity out of corresponding instruction document 4021 from storage section 402 and hands over the application data and instruction document to instruction document execution section 1012 (step S2b).

After the processing in next steps S3 and S4, terminal application 302 that allows information processing terminal 30 to execute an authentication information calculation by the complexity selected by complexity selection section 4010 is issued to information processing terminal 30. The processing from step S5 onward is similar to that in FIG.2 in Embodiment 1. However, terminal application 302 and challenge response message in mutual authentication are exchanged between server 40 and information processing terminal 30 via network 50.

As shown above, according to Embodiment 4 of the present invention, the calculation of authentication information complication calculation section 3021 of information processing terminal 30 becomes complicated according to the same principle as in Embodiment 1 and authentication information calculation section 1014 in server 40 is required to carry out only a simple calculation. That is, this configuration can reduce the processing load on server 40. Furthermore, since authentication information complication calculation section 3021 in terminal application 302 can select the complexity of calculation to be executed according to the situation, it is possible to flexibly processes the case where requests for the terminal application are received from many information processing terminals or a communication environment or operation environment of the information processing terminals and thereby smooth services.

Embodiment 4 explained so far provides instruction document 4021 for each degree of complexity to make the complexity of authentication processing calculations variable, but the present invention is not limited to this. For example, application management section 4011 may change the number or type of calculation methods to be embedded in terminal application 302 according to the complexity selected by complexity selection section 4010. In this case, instructions matching the complexity required in instruction document 4021 may be described, for example.

Furthermore, complexity selection section 4010 may decide processing power of the other party of communication, select complexity according to the magnitude of the information throughput, decide the reliability of the other party of communication and select complexity according to the level of reliability. To be more specific, in the case of information processing terminal 30 of low reliability type, for example, the complexity of calculation processing of authentication information complication calculation section 3021 may be increased by increasing the number of calculation methods embedded or making the types of calculation methods ones involving more complicated processing. On the other hand, in the case of information processing terminal 30 of high reliability type, the complexity of calculation processing of authentication information complication calculation section 3021 may be decreased by decreasing the number of calculation methods embedded or making the types of calculation methods ones involving less complicated processing.

Furthermore, complexity selection section 4010 may select appropriate complexity according to the type of network 50 used (including transmission speed and reliability). To be more specific, in the case of a network of low reliability, for example, the complexity of calculation processing of authentication information complication calculation section 3021 may be increased by increasing the number of calculation methods embedded or making the types of calculation methods ones involving more complicated processing. On the other hand, in the case of a network of high reliability, the complexity of calculation processing of authentication information complication calculation section 3021 may be reduced by decreasing the number of calculation methods embedded or making the types of calculation methods ones involving less complicated processing.

Furthermore, complexity selection section 4010 may change the time for the timeout of the above described authentication processing according to the throughput of information processing terminal 30 and transmission speed of network 50. For example, when a response in authentication processing is slow, when the throughput of information processing terminal 30 is low or when the transmission speed of network 50 is low, the time for the timeout is made longer. On the other hand, when a response in authentication processing is quick, when the throughput of information processing terminal 30 is high or when the transmission speed of network 50 is high, the time for the timeout is shortened.

### (Embodiment 5)

The configurations of information processing terminal 30 and server 40 in Embodiment 5 of the present invention are similar to those in Embodiment 4 in FIG.7. However, the content of calculation complication information 1023 and the operation of calculation complication section 1013 that processes the calculation complication information are similar to the content of calculation complication information 1023 and the operation of calculation complication section 1013 that processes the calculation complication information according to Embodiment 2. Therefore, the calculation of authentication information complication calculation section 3021 of information processing terminal 30 becomes complicated according to the same principle as in Embodiment 2 and authentication information calculation section 1014 in server 40 is required to carry out only a simple calculation.

The operations of server 40 and information processing terminal 30 in Embodiment 5 will be explained with reference to FIG.7 and FIG.8 and in correspondence with step numbers in FIG.7 and FIG.8.

Processing in steps S1 to S2b is similar to that in Embodiment 4 and terminal application data 1022 and instruction document 4021 of the selected complexity are handed over to instruction document execution section 1012. Next, instruction document execution section 1012 embeds random numbers in authentication information 3041 to 304n using position information on a variable written in instruction document 4021 and hands over the authentication information to calculation complication section 1013. In this case, this embodiment differs from Embodiment 4 in that random numbers are also embedded in authentication information 3041 (step S3).

Next, calculation complication section 1013 acquires the corresponding calculation equation from calculation complication information 1023 using the calculation method set information and hands over the calculation equation and authentication information 3041 to 304n to authentication information calculation section 1014. However, unlike Embodiment 4, no inverse value C is acquired (step S4).

To be more specific, calculation complication section 1013 selects and embeds calculation method images 102300 to 102306 in a location provided in advance for terminal application data 1022 where calculation methods are embedded using the position information of the method written in instruction document 4021. In this case, calculation complication information 1023 shown in FIG.5 of Embodiment 2 is used. That is, "pair" describing pairs of methods that cancel out constants and "calc" describing calculation equations using "pair," are included. The processing of calculation complication section 1013 using calculation complication information 1023 shown in FIG.5 is as has been explained in Embodiment 2.

The processing from step S5 onward is similar to that in FIG.8 of Embodiment 4, that is, similar to that in FIG.2 of Embodiment 1.

In this way, Embodiment 5 of the present invention can also obtain the specific effect obtained in Embodiment 2 using server 40.

### (Embodiment 6)

The configurations of information processing terminal 30 and server 40 according to Embodiment 6 of the present invention are similar to those of information processing terminal 30 and secure device 10 according to Embodiment 4 shown in FIG.7. However, the content of calculation complication information 1023 and the operation of calculation complication section 1013 that processes the calculation complication information are the same as the content of calculation complication information 1023 and the operation of calculation complication section 1013 that processes the calculation complication information according to Embodiment 3 respectively. Therefore, the calculation of authentication information complication calculation section 3021 of information processing terminal 30 becomes complicated according to the same principle as in Embodiment 3 and authentication information calculation section 1014 in server 40 is required to only perform a simple calculation.

The operations of server 40 and information processing terminal 30 according to Embodiment 6 will be explained with reference to FIG.7 and FIG.8 and with reference to step numbers in FIG.7 and FIG.8.

Processing in steps S1 to S2b is similar to that in Embodiment 4 and terminal application data 1022 and instruction document 4021 of the selected complexity are handed over to instruction document execution section 1012. Next, instruction document execution section 1012 embeds random numbers in authentication information 3041 to 304n using the position information of variables written in instruction document 4021 and hands over the authentication information to calculation complication section 1013. In this case, this embodiment differs from Embodiment 4 in that random numbers are also embedded in authentication information 3041 (step S3).

Next, calculation complication section 1013 acquires the corresponding calculation equation from calculation complication information 1023 using the calculation method set information and hands over the calculation equation and authentication information 3041 to 304n to authentication information calculation section 1014. However, unlike Embodiment 4, no inverse value C is acquired (step S4).

To be more specific, calculation complication section 1013 selects and embeds calculation method image 102300 to 102306 in a location provided in advance for terminal application data 1022 in which calculation methods are embedded using the position information of the method written in instruction document 4021. In this case, calculation complication information 1023 shown in FIG.6 of Embodiment 3 is used. That is, "pair" describing pairs of methods that are multiplied into the value of "answer," and "calc" describing a calculation equation using "pair" are included. The processing of calculation complication section 1013 using calculation complication information 1023 shown in FIG.6 is as has been explained in Embodiment 3.

Processing from step S5 onward is similar to that in FIG.8 of Embodiment 4, that is, similar to that in FIG.2 of Embodiment 1.

In this way, according to Embodiment 6 of the present invention, server 40 can also obtain the specific effect obtained in Embodiment 3.

### (Conclusion)

As explained above, all the embodiments allow a code that varies every time to be added such that extra calculation is performed compared to a case where authentication information is simply calculated, and therefore the number of commands that attackers must analyze increases. Moreover, since the number of commands varies every time, analysis becomes more difficult. Furthermore, even if an ill-intentioned third party succeeds in an analysis once, the third party must perform an analysis once again, and therefore the security is sufficiently secured. Moreover, since it is only necessary to select a problem with an answer known in advance in the secure device or in the server, it is possible to suppress the degree of complexity of processing on an authentication key calculation on the secure device or server side.

Furthermore, the server selects the complexity of processing of authentication key calculation on the terminal application side according to the situation, and therefore it is possible to flexibly processes a case where requests for the terminal application are received from many information processing terminals or a communication environment or operation environment of the information processing terminal and thereby smooth services. Furthermore, the embodiments decide the communication environment or the operation environment of the information processing terminal, selects appropriate complexity, and can thereby secure safety and smooth services simultaneously in a well-balanced manner.

Entire content of the specification, drawings and abstract included in Japanese Patent Application No. 2005-354157 filed on December 7, 2005 and Japanese Patent Application No. 2006-330820 filed on December 7, 2006, is expressly incorporated by reference in the present invention.

### Industrial Applicability

The secure device, information processing terminal and authentication method of the present invention are useful as a secure device capable of making the content of an authentication information calculation of a terminal application complicated calculation processing which varies every time, while suppressing the processing load in the secure device and the code size of a card application low, an information processing terminal mounted with this secure device and an authentication method. That is, the secure device and authentication method of the present invention are useful as a secure device and authentication method that cause calculation content of authentication information to change to complicated content that varies every time, moreover can prevent the complexity of calculation processing from increasing in the secure device and allow safe authentication with the terminal application. Therefore, the present invention is applicable to various secure devices used in various information processing apparatuses such as cellular phones, portable information terminals (PDAs), personal computers, music playback/recording apparatuses, cameras, video cameras, automatic teller machines, street terminals, payment terminals, etc. Furthermore, the information processing terminal of the present invention is also applicable to the aforementioned various information processing apparatuses. Moreover, the server of the present invention is useful as a server capable of making the content of an authentication information calculation of a terminal application complicated calculation processing which varies every time, while suppressing the processing load in the server and the code size of server application low. Therefore, the server of the present invention is applicable to various servers placed on a network that provide services of delivering music data or the like.

## Claims

1. A secure device that is mounted in an information processing terminal, stores data and executes a calculation in a concealed manner, the secure device comprising:
a storage section that stores an application that allows the information processing terminal to perform processing;
a instruction document execution section that embeds, in the application, authentication information used to calculate an authentication key required in authentication processing between the application and the secure device;
a calculation complication section that creates a calculation problem, with a calculation result selected in advance for an answer, and embeds the calculation problem in the application as part of an authentication information calculation;
an authentication information calculation section that calculates the authentication information and the calculation result, and generates the authentication key; and
an authentication process ing section that performs authentication processing with the application executed by the information processing terminal, using the authentication key.

2. The secure device according to claim 1, wherein the storage section further stores calculation complication information which the calculation complication section uses to create the calculation problem, the calculation complication information holding at least a set of a calculation problem and a calculation result.

3. The secure device according to claim 1, wherein data of the calculation problem includes an image of a program code that can be embedded in the application.

4. The secure device according to claim 3, wherein the image of the program code comprises a code for solving the calculation problem.

5. The secure device according to claim 2, wherein the calculation complication section selects an adequate calculation problem such that part of a result of a complicated calculation performed by the application comprises a calculation result stored in the calculation complication information.

6. An information processing terminal comprising a secure device that stores data and executes a calculation in a concealed manner, and an application loader that requests an issue of an application and receives and starts an application including a complicated calculation from the secure device, wherein the secure device comprises:
a storage section that stores an application that allows the information processing terminal to perform processing;
a instruction document execution section that embeds, in the application, authentication information used to calculate an authentication key required in authentication processing between the application and the secure device;
a calculation complication section that creates a calculation problem, with a calculation result selected in advance for an answer, and embeds the calculation problem in the application as part of an authentication information calculation;
an authentication information calculation section that calculates the authentication information and the calculation result, and generates the authentication key; and
an authentication processing section that performs authentication processing with the application executed by the information processing terminal, using the authentication key.

7. The information processing terminal according to claim 6, wherein the storage section further stores calculation complication information which the calculation complication section uses to create the calculation problem, the calculation complication information holding at least a set of a calculation problem and a calculation result.

8. The information processing terminal according to claim 6, wherein data of the calculation problem includes an image of a program code that can be embedded in the application.

9. The information processing terminal according to claim 8, wherein the image of the program code comprises a code for solving the calculation problem.

10. The information processing terminal according to claim 7, wherein the calculation complication section selects an adequate calculation problem such that part of a result of a complicated calculation performed by the application is a calculation result stored in the calculation complication information.

11. A server transmitting an application that allows an information processingterminaltoperform processing, to the information processing terminal, the server comprising:
a storage section that stores the application;
a instruction document execution section that embeds, in the application, authentication information used to calculate an authentication key required in authentication processing between the application and the secure device;
a calculation complication section that creates a calculation problem, with a calculation result selected in advance for an answer, and embeds the calculation problem in the application as part of an authentication information calculation;
an authentication information calculation section that calculates the authentication information and the calculation result, and generates the authentication key; and
an authentication processing section that performs authentication processing with the application executed by the information processing terminal, using the authentication key.

12. The server according to claim 11, wherein the storage section further stores calculation complication information which the calculation complication section uses to create the calculation problem, the calculation complication information holding at least a set of a calculation problem and a calculation result.

13. The server according to claim 11, wherein data of the calculation problem includes an image of a program code that can be embedded in the application.

14. The server according to claim 13, wherein the image of the program code comprises a code for solving the calculation problem.

15. The server according to claim 12, wherein the calculation complication section selects an adequate calculation problem such that part of a result of a complicated calculation performed by the application is a calculation result stored in the calculation complication information.

16. The server according to claim 11, further comprising a complexity selection section that selects complexity of the calculation problem created by the calculation complication section.

17. An authentication method comprising the steps of:
selecting authentication information used to calculate an authentication key that is required in authentication processing with an application for allowing the information processing terminal to perform processing, and a calculation result;
creating a calculation problem whose answer is the selected calculation result;
embedding the selected authentication information in the application, and embedding the created calculation problem in the application as part of an authentication information calculation;
transmitting the application, in which the authentication information and the calculation problem are embedded, to the information processing terminal; and
performing authentication processing with the application executed by the information processing terminal using the authentication key which is created by calculating the authentication information embedded in the application transmitted to the information processing terminal and the calculation result.
